# EUROPEAN PATENT SPECIFICATION

(11) **EP 0 856 131 B1**
(45) Date of publication and mention of the grant of the patent: **16.01.2002**
(21) Application number: 96934833.3
(22) Date of filing: 16.10.1996
(51) Int. Cl.: F24D 11/02, F25B 15/06, F24F 3/06

(54) **METHOD AND ARRANGEMENT FOR PRODUCING COOLING POWER**
VERFAHREN UND VORRICHTUNG ZUR ERZEUGUNG VON KÄLTE
PROCEDE ET DISPOSITIF DE PRODUCTION D'ENERGIE DE REFROIDISSEMENT

(30) Priority: 17.10.1995 FI 954949
(43) Date of publication of application: 05.08.1998
(73) Proprietor: ABB INSTALLAATIOT OY, 21530 Paimio (FI)
(72) Inventor: LESKINEN, Seppo, FIN-01120 Västerskog (FI)
(74) Representative: Valkeiskangas, Tapio Lassi Paavali
(86) International application number: FI9600544
(87) International publication number: WO9714917

(56) References cited:
- WO-A-81/03062
- WO-A-91/02927
- WO-A-95/20133
- DERWENT'S ABSTRACT, No. H4775Y/36, week 36; & SU,A,516 879 (CONS ENG CORRESP), 27 October 1976.

## Description

The invention relates to a method of producing cooling power for one or more buildings and distributing the power to the buildings by means of liquid circulating in a pipe system, the cooling power being produced by an absorption aggregate or an other aggregate producing cooling energy and being transferred to the supply air of the building by an air-conditioning unit. The invention also relates to an arrangement for producing cooling power for one or more buildings.

Today buildings are generally cooled by a cooling aggregate based on a compressor aggregate, the cooling aggregates being dispersed to places of use. Cooling power is produced in them by electricity. The proportion of cooling of buildings in the consumption of electricity is now fairly important, e.g. in the Southern European countries the electricity consumption peaks in the summer. With regard to production, the consumption also occurs at an unfavourable time. The heat inevitably generated in connection with production of electricity cannot be used for much else than production of hot tap water, and so it has to be condensed and supplied to waterways e.g. by brine condensers or to air by cooling towers.

Cooling power could also be produced by waste heat produced in the production of electricity in so-called absorption aggregates, the best known of which are lithiumbromide/water and ammonia/water aggregates. The consumption of electricity and thus e.g. emissions of CO₂ could be reduced with these aggregates, and the waste heat, which is now completely wasted, could be utilized.

The preferred way of generating chill is a so-called district cooling system, in which cooling power is generated concentratedly in power plants and supplied to users via a pipe system in the same way as district heat. This has an advantageous effect e.g. on servicing costs, which in the present, dispersed systems are high, and on reliability, on levelling down of random load peaks, etc.

District cooling systems have not become common, however, due to high investment costs. Although the kWh price of the chill generated in this way is low as compared with the price of electricity, the number of hours of use is so small in those climatic zones where district heating systems are worth building that the investment costs will not be covered. In Finland, for example, such systems have thus not been built. The majority of them exist in Japan, Korea and the U.S.A.

WO-A-9520134 teaches a 3-pipe system, by which the costs of the distribution system can be reduced significantly. In addition, WO-A-9520135 teaches a system in which the operations of the heat exchangers are combined, which makes it possible to significantly reduce the investment costs in individual buildings. Further, Finnish Patent Application 940,344 teaches a system in which the return water of the district heating/cooling system is used as condensation water, which is needed by the absorption aggregate, whereby no cooling tower or other condenser is needed in the power plant. This reduces the investment costs and the costs of use in the production of district chill.

WO-A-8103062 describes a system which shortens running time of cooling compressors in buildings having cooling need trougout the year. Said system has however no affect to peak loads, and therefore the result is not optimal.

The above measures make district cooling systems worth building in new communities where all buildings that require cooling are connected to the system. The proportion of such building, however, is small in industrialized countries, and its proportion in all building is growing smaller. Most building now comprises extension or renovation of existing communities. It is then not possible to connect a significant number of buildings simultaneously to a district cooling system when a system is built in the area. A small number of buildings connected is not sufficient to cover the investment costs of a district cooling system and of generation of district chill, which prevents building of district cooling systems in existing communities.

A similar problem has been encountered when district heating systems have been built. The problem has been solved by movable heating stations in which heat is produced only for a limited area, whereby the costs of a distribution system have remained small and can have been covered immediately. When a sufficient number of areas has been connected, a main network is built, and the areas are connected to the power plant via the system. The movable heating stations are shifted to new areas or maintained in the area as heating stations that are used during maximum heat demand. The same idea cannot be applied to building of a district cooling system without any difficulties. It is true that the costs of building a main network are eliminated, but the use of return water as condensation water is here not possible. Because of this, cooling towers, ground water, etc. should be used. For example, it is often impossible to place cooling towers in urban areas for architectural reasons, lack of space, etc.

Some plants of the above type based on absorption aggregates have been built, and technically such systems work well, but their competitiveness with compressor cooling is questionable, and the smaller the number of hours of use (i.e. in mild and cold climatic zones, where district heating systems are common), the less competitive they are. The reason for this is that the investment costs of an absorption heat pump, a cooling tower and a distribution system are much higher than the costs of a corresponding compressor aggregate. Even when the energy, i.e. heat, is almost free and the electricity used by the compressor aggregate is expensive, a reduction in the costs of use is not sufficient to cover the difference in the investment costs if the number of hours of use is not sufficiently great. The situation is made worse by a strong, short-term load peak in the cooling demand, the peak being more than double the average load during a cooling period. This is due to the fact that in the mild and cold zone, the design outdoor temperature prevails only in the afternoon on a few days a year. The average cooling load is also short-term. Cooling, unlike heating, is not needed round-the-clock but only at midday and in the afternoon. Since the consumption of electricity in the countries situated in the cold and mild zones peaks in the winter, high investment costs cannot be substantiated by a reduction in the investments on electricity production machinery, like in the countries situated in the hot zone. Only a few such plants have thus been built in Middle and Northern Europe for test and research purposes, although they are common in the hot zone.

The object of the invention is to provide a solution by which the drawbacks of the prior art can be eliminated. This is achieved by the invention. The method of the invention is characterized by the method steps according to the characterising clause of claim 1. arrangement according to the invention, in turn, in characterized by the features contained in the characterising portion of claim 7.

The primary advantage of the invention is that the investment costs of absorption cooling can be reduced by the method and arrangement according to the invention by over 50% as compared with the known apparatus. The peak load is reduced by up to 75% but the energy consumption by only about 20 to 30%, which means a greater number of hours of use and more even heat consumption. This makes production of energy more economic and improves the efficiency. Further, most of the cooling energy needed annually can be produced at night when consumption of tap water is small and thus there is practically no use for heat. With a smaller peak load, i.e. smaller design output, the transfer pipes can have a smaller diameter, and so in some embodiments of the invention it is possible to connect buildings to the system from a larger area than with the known apparatus, which somewhat reduces the costs per unit, facilitates positioning of the aggregate, etc. In some embodiments, it is possible to pre-heat the tap water needed in the buildings with the return water of the cooling system, which further reduces the design output and energy consumption. When the absorption aggregate breaks down, the cooling system according to the invention is ensured to operate at about 75% of the maximum output for about 24 hours and at 30 to 60% of the maximum output continuously. Absorbtion cooling can thus compete with compressor cooling and achieve the above advantages in the production of energy and simultaneously protect the environment. The invention is based on integration of consumer equipment of the building and the cooling power production apparatus into an overall system such that they achieve the above advantages when they cooperate, whereby the technical system of a building cuts the peak load and the absorption aggregate levels the basic load. By the combined effect of the two, the reliability is improved in the above manner.

In the following the invention will be described in greater detail with reference to the solutions illustrated in the drawing, in which
fig. 1 is a diagram exemplifying a known solution,
fig. 2 is a diagram illustrating a first embodiment of an arrangement according to the invention,
fig. 3 is a diagram illustrating a second embodiment of an arrangement according to the invention,
fig. 4 is a diagram illustrating a third embodiment of an arrangement according to the invention.

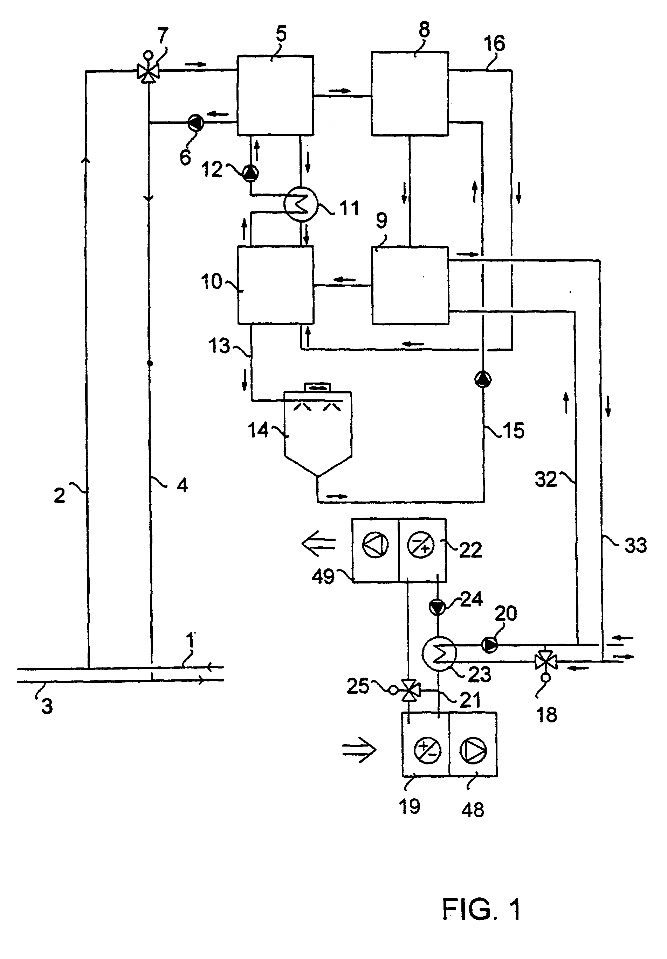

Fig. 1 exemplifies known solutions. The solution of fig. 1 operates, in principle, as presented in the following. Hot water is conducted from a supply pipe 1 of the district heating system through a pipe 2 to a boiler unit 5 of an absorption aggregate and returned through a pipe 4 to a return pipe 3 of the district heating system. To control the solution, the boiler 5 is usually equipped with a circulation pump 6 and a control valve 7. A coolant is evaporated from the absorbent with hot district heating water in the boiler 5. The coolant is conducted to a condenser 8, where it is cooled until it liquefies. From the condenser 8, the coolant is conducted to an evaporator 9, thereby reducing pressure such that the coolant evaporates, whereby the temperature drops and cools the circulation water in the cooling system of the building. From the evaporator 9, the coolant is conducted to an absorber 10, to which one also conducts an absorbent from the boiler 5 through a heat exchanger 11. The coolant is allowed to absorb to the absorbent in the absorber 10, whereby reaction heat is released. A solution of the absorbent and the coolant is pre-heated in a heat exchanger 11 and pumped to the boiler 5 with a pump 12 at an elevated pressure.

Heat is conducted from the outside to the boiler 5 and the evaporator 9 of the absorption aggregate, and it has to be conducted away in order that the aggregate would operate continuously. Cooling is usually implemented using water, which - heated - is conducted from the absorber 10 through a pipe 13 to a cooling tower 14, in which it is cooled evaporatively. Naturally, however, e.g. a brine condenser or some other apparatus known per se can be used. From the cooling tower 14, the water is pumped through a pipe 15 to the condenser 8 of the absorbtion aggregate and from there - somewhat heated - through a pipe 16 to the absorber 10, and from there back to the cooling tower 14. In the evaporator 9, the chilled cooling water of the building is conducted through a pipe 33 to the cooling water system of the building, from which it returns, heated, through a pipe 32 to the evaporator 9.

The building usually comprises many apparatuses that use cooling water, but for the sake of clarity, only one air-conditioning unit is shown in fig. 1. The cooling water flows through a control valve 18 to a heat exchanger 23, by which cooling power is transferred to a heat transfer circuit of an air-conditioning unit, from which it is returned by a pump 20 either through control valve 18 to the heat exchanger 23 or to the condenser 9. The heat exchanger 23 is not necessarily needed: the cooling water can also be supplied directly to a circulation water pipe 21 or even directly to a cooling radiator 19, if the air-conditioning unit does not comprise a recovery radiator 22 and thus a circulation water circuit.

The above solution has the drawbacks presented above in the general part describing the prior art.

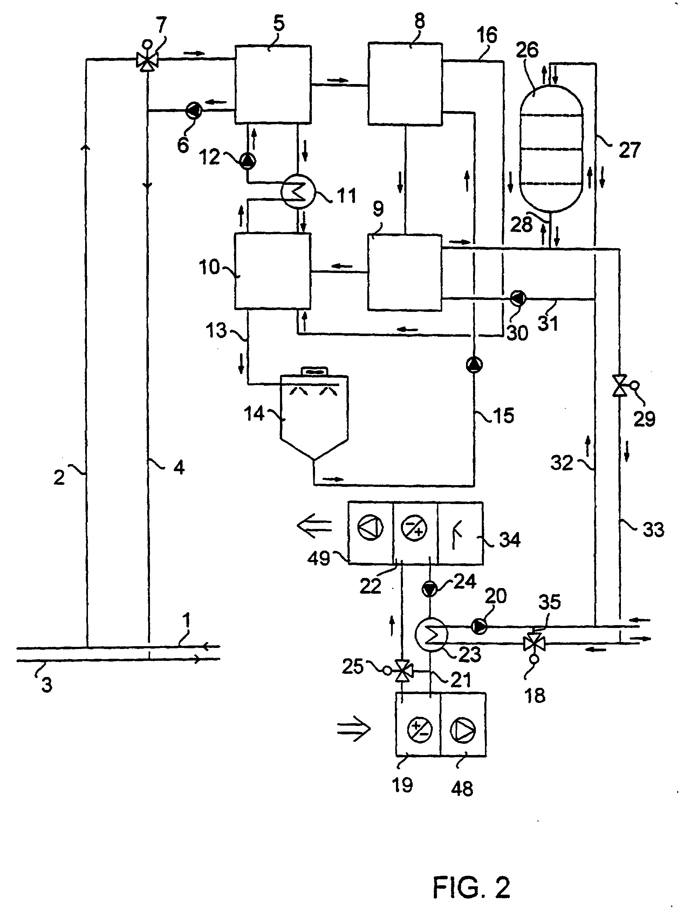

Fig. 2 illustrates a first preferred embodiment of an arrangement according to the invention. In fig. 2, like reference numbers identify correspondingly as in fig. 1. The basic load is levelled by adding a cold water tank 26 to the absorption aggregate. Preferably, the volume of the cold water tank corresponds to about a half of the design cooling energy consumption in a 24-hour period. The absorption aggregate further comprises a pump 30 and control and check valves 18, 29 needed for controlling the operation. The output of the absorption aggregate and the auxiliary devices is simultaneously reduced to about a half of the maximum output needed in the buildings. The tank naturally raises the investment costs and adds to the need of space, but not nearly as much as they are reduced by the reduction in the size of the absorption aggregate and its auxiliary devices.

The use of a tank is based on the realization that in the mild and cold zones, cooling is needed only during the day. An absorption aggregate can naturally also operate at night and thereby load cooling power in the tank, which is then unloaded during the day. In theory, the tank and the absorption aggregate can be designed in such a way that when the absorption aggregate operates continuously, i.e. 24 hours a day, at full power, it can generate the total amount of cooling energy needed in a design 24-hour period, whereby the design output is much less than half, maybe about 30-35%, of the maximum output needed by the buildings. This, however, would lead to an excessively large tank and an increase in the need of space and in the investment costs. The principle of design also changes in the overall system provided by the invention, the system comprising the step of cutting the peak load, which is described below.

The peak load can be cut by providing the air-conditioning units used for cooling the building with an evaporative cooling system 34 that is known per se and is described e.g. in Finnish Patent 67,253. The use of evaporative cooling as a part of the overall system is based on the realization that the higher the outdoor temperature, the more effective the evaporative cooling. When it operates on its own, the operative cooling can cool the supply air under all conditions slightly below the design temperature of the indoor air. When the outdoor temperature is e.g. 30°C, it can thus cool the supply air to about 23°C, i.e. by about 7°C, but when the outdoor temperature is only about 20°C, the supply air is cooled only to about 19°C, i.e. by about 1°C. Evaporative cooling can usually cover the part of the total cooling power that is needed for cooling outdoor air and for eliminating heat radiation coming through windows and some of the heat loads internal of the building. Variations in the outdoor temperature and solar radiation produce the load peaks on account of which the relation between the investment costs and the costs of use of the absorption aggregate is so disadvantageous in the mild and cold climatic zones. In the system of the invention, cooling power needed for removing the heat loads internal of the building is produced by an absorption aggregate, the cooling power in most types of buildings being almost constant when the building is in use.

The cutting of a peak load means that the size of both the absorption aggregate and the tank can be further reduced, usually by 30 to 40%, since evaporative cooling does not reduce the energy consumption in a 24-hour period as much as it reduces the maximum consumption. This is essentially affected by the relation between the heat loads external and internal of the building.

The investment costs of evaporative cooling are a fraction of what is saved by reducing the size of the tank and the absorption aggregate. The investments on the overall system are usually less than half of what the price of an absorption aggregate conventionally designed in accordance with the peak load would be. It must be born in mind that the pipe systems, cooling towers, etc. needed are then also smaller.

The reliability of the system according to the invention is essentially better than that of the previously known systems. If an absorption aggregate breaks down, the system is operated by the tank and evaporative cooling at about 75% of the maximum output for about 24 hours, or by evaporative cooling at about 50% output continuously. The breaking down of the evaporative cooling system does usually not reduce the maximum output significantly, since the building or buildings served by the system usually comprise(s) several air-conditioning units. If the evaporative cooling system of one unit breaks down, the other units continue to operate. In the unit concerned, the missing power can be compensated for by using more cooling water obtained from the tank and the absorption aggregate. It should also be noted that peak load is rare. The probability of peak load occurring simultaneously with a malfunction is minimal.

The arrangement according to fig. 2 operates, in principle, as described in the following. In the event of maximum load, the moistening part 34, which belongs to the evaporative cooling system, moistens exhaust air, whereby the water evaporating to the air absorbs heat and the temperature of the exhaust air drops. The water heated by the supply air in the cooling radiator 19 and circulated with a pump 24 in the recovery radiator 22 is cooled by cool exhaust air. The higher the outdoor temperature, the greater part of the total cooling power needed is covered by this part of the system. When the outdoor temperature has dropped to about 19°C, the evaporative cooling power is negligible.

The additional power needed is supplied to the cooling radiator by the heat exchanger 23, through which pump 20 pumps water from the condenser 9 and the tank 26 of the absorption aggregate. The ratio between cold water obtained from pipe 33 and circulation water is controlled by a three-way valve 18 such that the temperature of the circulation liquid supplied though pipe 21 to the cooling radiator 19 is suitable.

In the event of maximum load, valve 18 closes the circulation pipe 35, and the total amount of liquid of pump 20 is obtained from the supply pipe 33 and returned to the return pipe 32. The circulation pump 30 of the condenser 9 is sized such that its flow of water is half the flow of water of pump 20. Half of the flow of water is conducted through pipe 32 to the tank 26 e.g. with a three-way valve or with some other suitable device. Correspondingly, half of the flow of water on the supply side is obtained from the evaporator 9 and half from the tank 26 through pipe 33. Valve 29 is completely open. The tank 26 is thus unloaded at full capacity by supplying hot return water to the tank through pipe 27 and drawing stored cold water through pipe 28.

Depending on the time of use, duration of daily maximum load, etc. in the building, the ratio between the flows of water of pumps 20 and 30 may be other than 1:2. The flow of water of pump 20 here means the combined capacity of all the circulation pumps of the devices that use chill in a building/buildings.

Instead of pump 20, it is possible to use a collector pump arranged in pipe 32, 33 or 27 for circulation, the design flow of the pump in pipes 32 and 33 being the same as that of pump 20 and the same as the difference between pumps 30 and 20 in pipe 27.

As the amount of cooling power needed in the buildings grows smaller, usually due to a drop in the outdoor temperature, the evaporative cooling power decreases although slower than the cooling power needed. Maximum power need then not be supplied to heat exchanger 23. Valve 18, which is controlled in a manner known per se using a thermostat, an exhaust air thermostat or the like, starts to open flow paths to the circulation pipe 35 and to close the flow path to pipe 32. The flow of water in pipes 32 and 33 is then reduced. Pump 30 continues to operate at full capacity. The flow of hot water supplied to the tank 26 through pipe 27 and the amount of cold water drawn from there through pipe 28 drop, i.e. the use of stored cooling energy is reduced.

When the cooling power needed is further reduced, usually as the outdoor temperature drops, the evaporative cooling power is reduced further until - usually at an outdoor temperature of about 18°C - it is zero. Depending on the use, heat load, target indoor temperature, etc. of the building(s), the rest of the system may operate differently as follows.

If the heat loads of a building or buildings are small, the evaporative cooling power may be sufficient to cover them. When no additional cooling power is needed from the absorption aggregate/tank, the control thermostat closes valve 29, stops pump 20, opens the flow path of valve 18 to pipe 35 and closes its flow path to pipe 33 to the full. Pump 30 continues to operate at full capacity and since the flow paths to the apparatuses of the building are closed, the pump draws the whole flow of liquid through pipe 27 from tank 26 and returns the liquid, cooled, through pipe 28, i.e. loads the tank 26 at full capacity.

When the tank 26 is loaded, which can be checked e.g. by a thermostat arranged in the upper part of the tank or by some other device known per se, the thermostat stops the operation of pump 30 and of the absorption aggregate and cooling tower, i.e. stops pumps 6 and 12, stops drawing heat from the district heating system 1 using valve 7, stops the fan of the cooling tower 14, etc. Evaporative cooling continues to operate. The power can be controlled e.g. by conducting part of the flow of water by valve 25 past the cooling radiator 19. When no more cooling is needed, pump 24 and the flow of water to the moistening part 34 are stopped.

If the heat loads are great, the evaporative cooling power runs out before the cooling demand of the building does. The arrangement of fig. 2 has to be changed then e.g. such that the recovery radiator 22 is passed, since otherwise the radiator will start heating water. To pass the radiator, e.g. valve 25 can be moved such that it conducts the return flow of the cooling radiator 19 directly to the suction side of the pump 24 past the recovery radiator 22, or a bypass valve can be added to the arrangement.

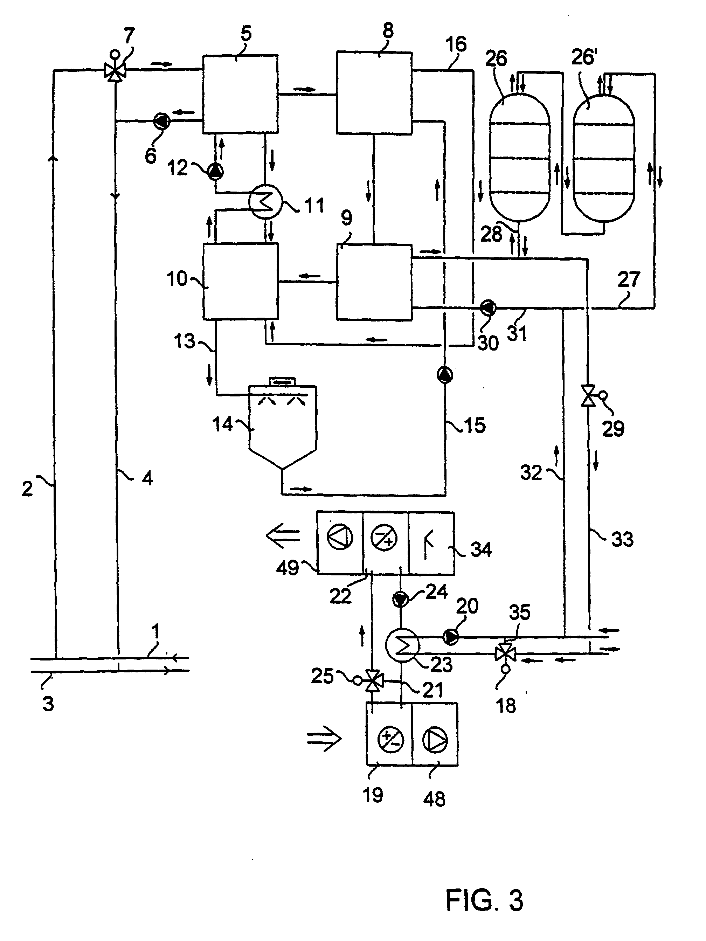

Fig. 2 shows tank 26. It is often advantageous to use more than one tank, for example, so as to optimize the use of space or to prevent cold and hot water from mixing. Fig. 3 shows this kind of solution comprising tanks 26 and 26' connected in series. Tank 26' is unloaded first, and then tank 26. Loading is naturally performed in the opposite order. Otherwise the operation is as shown in fig. 2. The tanks can naturally also be connected in parallel.

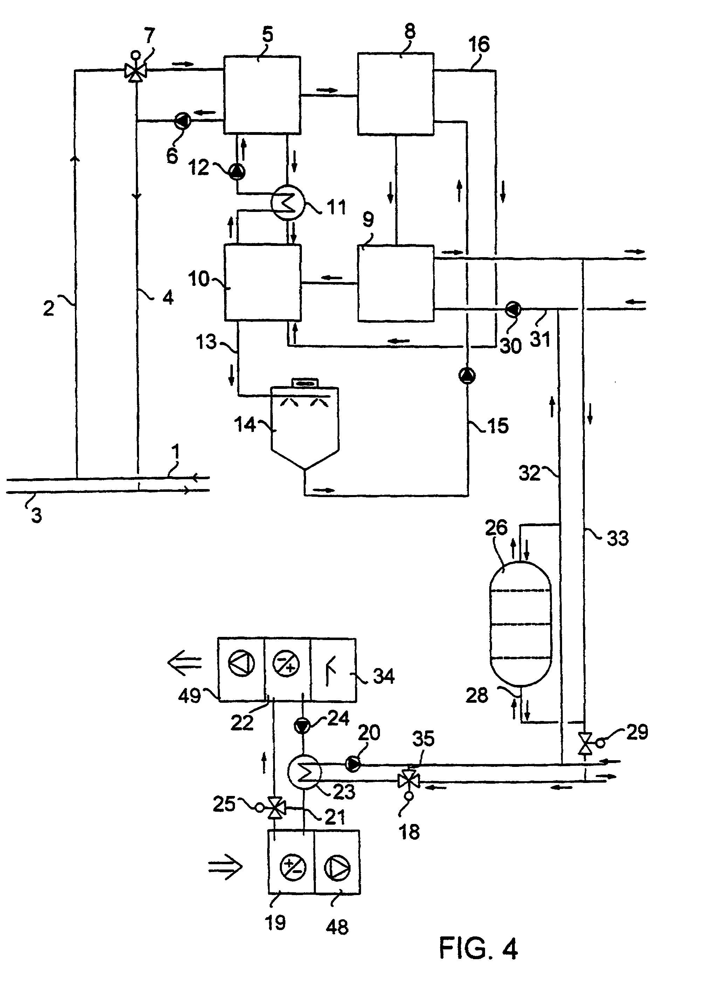

To reduce the costs of pumping and investments on manifolds, i.e. pipes 32 and 33, in wide areas, the basic idea of the invention can be implemented in dispersed form such that tanks 26, 26'... are arranged in some buildings or in all buildings or in their vicinity, even relatively far away from the absorption aggregate. This kind of solution is shown in fig. 4.

Naturally, cooling water can also be supplied to other apparatuses that need cooling power, not just to air-conditioning units. They are connected to the distribution system in the same way as the air-conditioning units. The design of the tank and absorption aggregate will naturally change, but the power peak is usually caused by air-conditioning, so the power-cutting effect of the evaporative cooling will remain.

In some cases, the absorption aggregate will have to be used periodically, e.g. in the spring and autumn, when the cooling load in a building is small. Preferably, the problem is solved by using the aggregate only at night and storing cold water in a tank 26. In day-time, the absorption aggregate is not used; cooling is performed with water stored in the tank. Air-conditioning units 18 to 25 and 35 to 41 need then not be used, since the stored water has a temperature of 20°C.

It is also possible to provide an auxiliary tank for the 20°C return water of the cooling systems of the building produced between operating periods and/or for the 50 to 55°C water produced during an operating period, or for both. They are connected with pipe and control arrangements known per se, and the arrangements can be varied in many ways depending on the selected strategy of use. All the above solutions known per se are encompassed by the invention.

The above embodiments are not to be understood as limiting the invention in any way, but the invention can be varied quite freely within the scope of the claims. The above embodiments thus describe the invention only by way of an example, illustrating the basic idea of the invention. It is obvious that the apparatuses can be designed and connected in different ways depending on the climate, type of building, geographical location, size of aggregate, etc. All such embodiments known per se are encompassed by the invention. For example, concentration water can be cooled by using a heat exchanger and water obtained from the waterways, rather than by a cooling tower. In the above description, the absorption aggregate is assumed to obtain its operating energy from district heating water. The source of heat, however, may be any separate source of heat whatsoever, e.g. a boiler, waste heat produced in industry, a solar panel, etc. This, however, usually raises the overall costs, and/or the same environmental advantages are not achieved as with the use of district heat. The above description of the invention is based on the assumption that cooling power is produced by an absorption aggregate, since the advantages are the greatest when such an aggregate is used. Naturally, the invention also applies to other apparatuses used for producing cooling power.

## Claims

1. A method of producing cooling power for one or more buildings and distributing the power to the buildings by means of liquid circulating in a pipe system, the cooling power being produced by an absorption aggregate (5, 8, 9, 10) or an other aggregate producing cooling energy and being transferred to the supply air of the building by an air-conditioning unit, **characterized in that** when the cooling demand is great, part of the cooling power is produced in evaporative cooling devices (34) contained in the air-conditioning units of the building and part is obtained as cooled circulation liquid from a cold water tank (26, 26') added to the absorption aggregate (5, 8, 9, 10) or the other aggregate producing cooling energy, and that when the circulation liquid obtained from the cold water tank (26, 26') has heated up in consumer devices, it is returned to the cold water tank.

2. A method according to claim 1, **characterized in that** when the cooling demand of a building is small, heated water obtained from the cold water tank (26, 26') is cooled at least in part by an absorption aggregate (5, 8, 9, 10) or the other aggregate producing cooling energy and returned to the tank.

3. A method according to claim 2, **characterized in that** when the cooling demand of a building is small, cooling power is produced by evaporative cooling (34).

4. A method according to any one of preceding claims 1 to 3, **characterized in that** the operating energy for an absorption aggregate or the like is obtained from a separate source of heat.

5. A method according to claim 4, **characterized in that** the separate source of heat is district heating water (19).

6. A method according to any one of preceding claims 1 to 5, **charaaterized in that** the cooling power needed by a building is obtained in day-time from a tank (26) in which cold circulation liquid is stored at night.

7. An arrangement of producing cooling power for one or more buildings and distributing the power to the buildings by means of liquid circulating in a pipe system, the cooling power being produced by an absorption aggregate (5, 8, 9, 10) or an other aggregate producing cooling energy and the cooling power being transferred to the supply air of the building by an air-conditioning unit, **characterized in that** a moistening part (34) associated with evaporative cooling is arranged in the air-conditioning units of the building, that a cold water tank (26, 26') is arranged in the absorption aggregate (5, 8, 9, 10) or the other aggregate producing cooling energy, that when the cooling power is great, part of the cooling power is arranged to be produced by using the above evaporative cooling and cooled circulation liquid obtained from the cold water tank (26, 26'), and that the circulation liquid obtained from the cold water tank (26, 26') is arranged to be returned to the cold water tank after it has heated up in consumer devices.

8. An arrangement according to claim 7, **characterized in that** the volume of the cold water tank (26, 26') is arranged to be essentially half of the design cooling energy consumption in a 24-hour period.

9. An arrangement according to claim 7 or 8, **charaaterized in that** the absorption aggregate (5, 8, 9, 10) or an other aggregate producing cooling energy is arranged to cool, at least in part, the heated water obtained from the cold water tank (26, 26') when the cooling demand of the building is small.

10. An arrangement according to claim 9, **characterized in that** the cooling power needed for cooling a building is arranged to be produced by evaporative cooling (34) when the cooling demand is small.

11. An arrangement according to any one of preceding claims 7 to 10, **characterized in that** the operating energy of the absorption aggregate (5, 8, 9, 10) or the other aggregate producing cooling energy is arranged to be obtained from a separate source of heat.

12. An arrangement according to claim 11, **characterized in that** the separate source of heat is district heating water (1).

13. An arrangement according to any one of preceding claims 7 to 12, **characterized in that** cold circulation water is arranged to be stored in a tank (26) at night and that the tank (26) is arranged to supply stored water in day-time when power is needed in the building.

## Patentansprüche

1. Verfahren zum Erzeugen von Kühlleistung für ein oder mehrere Gebäude und Verteilen der Leistung an die Gebäude mittels einer in einem Rohrleitungssystem zirkulierenden Flüssigkeit, bei dem die Kühlleistung durch ein Absorptionsaggregat (5, 8, 9, 10) oder ein anderes Kühlenergie erzeugendes Aggregat erzeugt und an die Zuluft des Gebäudes durch eine Klimatisierungseinheit übertragen wird, **dadurch gekennzeichnet, dass** dann, wenn die Kühlnachfrage groß ist, ein Teil der Kühlleistung in Verdunstungskühlgeräten (34) erzeugt wird, die in den Klimatisierungseinheiten des Gebäudes enthalten sind, und ein Teil als gekühlte Umwälzflüssigkeit aus einem dem Absorptionsaggregat (5, 8, 9, 10) oder dem anderen Kühlenergie erzeugenden Aggregat angefügten Kaltwasserbehälter (26, 26') erhalten wird, und dass dann, wenn sich die aus dem Kaltwasserbehälter (26, 26') erhaltene Flüssigkeit in Verbrauchergeräten erwärmt hat, sie zum Kaltwasserbehälter zurückgeführt wird.

2. Verfahren nach Anspruch 1, **dadurch gekennzeichnet, dass** dann, wenn die Kühlnachfrage des Gebäudes gering ist, erwärmtes aus dem Kaltwasserbehälter (26, 26') erhaltenes Wasser zumindest teilweise durch das Absorptionsaggregat (5, 8, 9, 10) oder das andere Kühlenergie erzeugende Aggregat abgekühlt und in den Behälter zurückgeführt wird.

3. Verfahren nach Anspruch 2, **dadurch gekennzeichnet, dass** dann, wenn die Kühlnachfrage des Gebäudes gering ist, Kühlleistung durch Verdunstungskühlung (34) erzeugt wird.

4. Verfahren nach einem der vorstehenden Ansprüche 1 bis 3, **dadurch gekennzeichnet, dass** die Betriebsenergie für ein Absorptionsaggregat oder dgl. von einer getrennten Wärmequelle erhalten wird.

5. Verfahren nach Anspruch 4, **dadurch gekennzeichnet, dass** die getrennte Wärmequelle Fernheizungswasser (19) ist.

6. Verfahren nach einem der vorstehenden Ansprüche 1 bis 5, **dadurch gekennzeichnet, dass** die von einem Gebäude benötigte Kühlleistung am Tag von einem Behälter (26) erhalten wird, in dem des Nachts kalte Umwälzflüssigkeit gespeichert wird.

7. Anordnung zum Erzeugen von Kühlleistung für ein oder mehrere Gebäude und zum Verteilen der Leistung an die Gebäude mittels einer in einem Rohrleitungssystem zirkulierenden Flüssigkeit, bei dem die Kühlleistung durch ein Absorptionsaggregat (5, 8, 9, 10) oder ein anderes Kühlenergie erzeugendes Aggregat erzeugt und an die Zuluft des Gebäudes durch eine Klimatisierungseinheit übertragen wird, **dadurch gekennzeichnet, dass** ein mit Verdunstungskühlung in Zusammenhang stehender Befeuchtungsteil (34) in den Klimatisierungseinheiten des Gebäudes angeordnet ist, dass ein Kaltwasserbehälter (26, 26') im Absorptionsaggregat (5, 8, 9, 10) oder dem anderen Kühlenergie erzeugenden Aggregat angeordnet ist, dass dann, wenn die Kühlleistung hoch ist, dafür gesorgt ist, dass ein Teil der Kühlleistung durch Verwenden der obigen Verdunstungskühlung und der gekühlten Umwälzflüssigkeit aus dem Kaltwasserbehälter (26, 26') erzeugt wird, und dass die aus dem Kaltwasserbehälter (26, 26') erhaltene Umwälzflüssigkeit zum Kaltwasserbehälter zurückgeführt wird, nachdem sie sich in Verbrauchergeräten erwärmt hat.

8. Anordnung nach Anspruch 7, **dadurch gekennzeichnet, dass** das Volumen des Kaltwasserbehälters (26, 26') so ausgelegt ist, dass es im Wesentlichen der Hälfte der des Auslegungs-Kühlenergieverbrauchs in einem Zeitraum von 24 Stunden entspricht.

9. Anordnung nach Anspruch 7 oder 8, **dadurch gekennzeichnet, dass** das Absorptionsaggregat (5, 8, 9, 10) oder das andere Kühlenergie erzeugende Aggregat so ausgeführt ist, dass es zumindest teilweise das aus dem Kaltwasserbehälter (26, 26') erhaltene erwärmte Wasser abkühlt, wenn die Kühlnachfrage des Gebäudes gering ist.

10. Anordnung nach Anspruch 9, **dadurch gekennzeichnet, dass** die zum Kühlen eines Gebäudes erforderliche Kühlleistung durch Verdunstungskühlung (34) erzeugt wird, wenn die Kühlnachfrage gering ist.

11. Anordnung nach einem der vorstehenden Ansprüche 7 bis 10, **dadurch gekennzeichnet, dass** die Betriebsenergie des Absorptionsaggregats (5, 8, 9, 10) oder des anderen Kühlenergie erzeugenden Aggregats von einer getrennten Wärmequelle erhalten wird.

12. Anordnung nach Anspruch 11, **dadurch gekennzeichnet, dass** die getrennte Wärmequelle Fernheizungswasser (1) ist.

13. Anordnung nach einem der vorstehenden Ansprüche 7 bis 12, **dadurch gekennzeichnet, dass** kaltes Umwälzwasser des Nachts im Behälter (26) gespeichert wird und dass der Behälter so ausgeführt ist, dass er gespeichertes Wasser während des Tags liefert, wenn im Gebäude Leistung benötigt wird.

## Revendications

1. Procédé pour produire de l'énergie de refroidissement pour un ou plusieurs bâtiments et distribuer l'énergie dans les bâtiments à l'aide de liquide circulant dans un réseau de tuyaux, l'énergie de refroidissement étant produite par un agrégat d'absorption (5, 8, 9, 10) ou un autre agrégat produisant de l'énergie de refroidissement et étant transférée dans l'air d'alimentation du bâtiment par une installation de climatisation, **caractérisé en ce que**, lorsque la demande de refroidissement est forte, une partie de l'énergie de refroidissement est produite dans des dispositifs de refroidissement par évaporation (34) contenus dans les installations de climatisation du bâtiment, et une partie est obtenue par un liquide réfrigéré circulant depuis un réservoir (26, 26') d'eau froide et ajouté dans l'agrégat d'absorption (5, 8, 9, 10) ou l'autre agrégat produisant de l'énergie de refroidissement, et **en ce que**, lorsque le liquide circulant depuis le réservoir (26, 26') d'eau froide s'est réchauffé dans des dispositifs utilisateurs, il est renvoyé dans le réservoir d'eau froide.

2. Procédé selon la revendication 1, **caractérisé en ce que**, lorsque la demande de refroidissement d'un bâtiment est faible, l'eau chauffée obtenue à partir du réservoir (26, 26') d'eau froide est refroidie au moins en partie par un agrégat d'absorption (5, 8, 9, 10) ou par l'autre agrégat produisant de l'énergie de refroidissement et est renvoyée dans le réservoir.

3. Procédé selon la revendication 2, **caractérisé en ce que**, lorsque la demande de refroidissement d'un bâtiment est faible, l'énergie de refroidissement est produite par le dispositif de refroidissement par évaporation (34).

4. Procédé selon l'une quelconque des revendications 1 à 3, **caractérisé en ce que** l'énergie de fonctionnement pour un agrégat d'absorption ou analogue est obtenue à partir d'une source de chaleur séparée.

5. Procédé selon la revendication 4, **caractérisé en ce que** la source de chaleur séparée est de l'eau du réseau de chauffage urbain (19).

6. Procédé selon l'une quelconque des revendications précédentes 1 à 5, **caractérisé en ce que** l'énergie de refroidissement nécessitée par un bâtiment est obtenue pendant la journée à partir d'un réservoir (26) dans lequel, durant la nuit, est stocké un liquide de circulation froid.

7. Système pour produire de l'énergie de refroidissement pour un ou plusieurs bâtiments et distribuer de l'énergie dans des bâtiments à l'aide d'un liquide circulant dans un réseau de tuyaux, l'énergie de refroidissement étant produite par un agrégat d'absorption (5, 8, 9, 10) ou par un autre agrégat produisant de l'énergie de refroidissement, et l'énergie de refroidissement étant transférée dans l'air d'alimentation du bâtiment par une installation de climatisation, **caractérisé en ce qu'**un moyen d'humidification (34) associé à un dispositifde refroidissement par évaporation est disposé dans les installations de climatisation du bâtiment, **en ce qu'**un réservoir (26, 26') d'eau froide est disposé dans l'agrégat d'absorption (5, 8, 9, 10) ou dans l'autre agrégat produisant de l'énergie de refroidissement, **en ce que** lorsque l'énergie de refroidissement est forte, il est fait en sorte qu'une partie de l'énergie de refroidissement soit produite à l'aide du dispositif de refroidissement par refroidissement précité et du liquide de circulation refroidi obtenu à partir du réservoir (26, 26') d'eau froide, et **en ce qu'**il est fait en sorte que le liquide de circulation obtenu à partir du réservoir (26, 26') d'eau froide soit renvoyé dans le réservoir d'eau froide après s'être réchauffé dans des dispositifs utilisateurs.

8. Système selon la revendication 7, **caractérisé en ce qu'**il est fait en sorte que le volume du réservoir (26, 26') d'eau froide soit sensiblement de la moitié de la consommation théorique d'énergie de refroidissement au cours d'une période de 24 heures.

9. Système selon la revendication 7 ou 8, **caractérisé en ce que** l'agrégat d'absorption (5, 8, 9, 10) ou l'autre agrégat produisant de l'énergie de refroidissement est destiné à refroidir, au moins en partie, l'eau réchauffée obtenue à partir du réservoir (26, 26') d'eau froide lorsque la demande de refroidissement du bâtiment est faible.

10. Système selon la revendication 9, **caractérisé en ce qu'**il est fait en sorte que l'énergie de refroidissement nécessaire pour refroidir un bâtiment soit produite par le dispositif de refroidissement par évaporation (34) lorsque la demande de refroidissement est faible.

11. Système selon l'une quelconque des revendications précédentes 7 à 10, **caractérisé en ce qu'**il est fait en sorte que l'énergie de fonctionnement de l'agrégat d'absorption (5, 8, 9, 10) ou de l'autre agrégat produisant de l'énergie de refroidissement soit obtenue à partir d'une source de chaleur séparée.

12. Système selon la revendication 11, **caractérisé en ce que** la source de chaleur séparée est de l'eau (1) du réseau de chauffage urbain.

13. Système selon l'une quelconque des revendications 7 à 12, **caractérisé en ce qu'**il est fait en sorte que l'eau de circulation froide soit stockée durant la nuit dans un réservoir (26) et que, pendant la journée, lorsque de l'énergie est nécessaire dans le bâtiment, le réservoir (26) fournisse de l'eau stockée.
